# EUROPEAN PATENT SPECIFICATION

(11) **EP 0 332 900 B1**
(45) Date of publication and mention of the grant of the patent: **04.08.1993**
(21) Application number: 89103279.9
(22) Date of filing: 24.02.1989
(51) Int. Cl.: G02B 26/02, G08B 13/12

(54) **A switch for optical fibers and anti-effraction fence made by utilizing said switch**
Optischer Faserschalter und Einbruchsicherheitszaun mit solchem Schalter
Interrupteur à fibre optique et clôture antieffraction munie d'un tel interrupteur

(30) Priority: 02.03.1988 IT 1243088
(43) Date of publication of application: 20.09.1989
(73) Proprietor: CI.KA.RA. S.R.L., I-40137 Bologna (IT)
(72) Inventor: Ciordinik, Jacques, I-40136 Bologna (IT); Ciordinik, Federico, I-40137 Bologna (IT); Bellettati, Michele, I-44019 Voghiera (IT)
(74) Representative: Porsia, Bruno

(56) References cited:
- EP-A- 0 246 487
- EP-A- 0 308 737
- FR-A- 2 513 390
- GB-A- 1 460 211
- GB-A- 1 520 813
- GB-A- 2 190 211

## Description

This invention relates to a switch for optical fibres according to claim 1, and to an anti-effraction or anti-intrusion fence according to claims 10 and 11.

A switch for optical fibre cables according to the pre-characterizing part of claim 1, is known from the Figures 4a and 4b of the document EP-A-0 246 487. In this known switch, a second opening is provided in a stationary part of the housing which is adjacent to the cable-deflecting member, on only one side thereof, an optical fibre cable being passed through this second opening. On the other side of the cable-deflecting member, the optical fibre cable issuing from the first opening in the cable-deflecting member, is by no means guided, and is entirely loose. In the document EP-A-0 246 487, nothing is stated about the longitudinal profile of the first opening provided in the cable-deflecting member. It is however obvious that owing to the small thickness of the cable-deflecting member, the first opening provided therein is a cylindrical bore.

In the devices according to the documents GB-A-1 460 211, GB-A-2 190 211, and FR-A-2 513 390, the optical fibre is pressed between two profiled surfaces, which are movable toward each other, transversally to the optical fibre, or are slidable the one with respect to the other in the longitudinal direction of the optical fibre, so that a compression or a waviness of the optical fibre is thus produced.

On the other hand, according to the document GB-A-1 520 813, the optical fibre is fastened to a spring that can be flexed into a stable and into an unstable position, and is deformed together with the spring.

Therefore, the devices according to these latter documents do not correspond to the switch for optical fibre cables according to the pre-characterizing part of claim 1.

The switch for optical fibres according to the invention, is characterized by the combination of the features as stated in the characterizing part of claim 1. Some advantageous, further improvements of the invention form the object of the dependent claims 2 to 9.

Anti-effraction fences comprising optical conductor wires and sensors are known in the art, see for instance EP-A-0 308 737 (cited under Article 54(3) EPC). Some of the embodiments of the switch of the invention are particularly adapted as sensors for anti-effraction fences, which are the object of Claims 10 and 11.

Some embodiments of the invention are shown in the drawings by way of non-limiting examples.

Figure 1 is a sectional view showing one embodiment of the switch for optical fibres, according to the invention, in its conductive position.

Figure 2 is a sectional view showing the switch for optical fibres according to Figure 1, in its interruptive position.

Figures 3 to 5 show another embodiment of the switch for optical fibres, according to the invention, in its application as a position detector.

Figure 6 is an exploded perspective view showing the individual members forming the switch for optical fibres according to Figures 3 to 5.

Figure 7 is a side view showing a third embodiment of the switch for optical fibres according to the invention.

Figures 8 and 9 are sectional views showing the switch for optical fibres according to Figure 7, in the conductive and interruptive positions thereof.

Figures 10 to 12 are sectional views showing the switch according to Figure 7, which is set up in a different manner and is shown in three different operative positions.

Figure 13 shows a modified embodiment of the switch according to Figures 10 to 12.

Figures 14 and 15 show a fourth embodiment of the switch for optical fibres according to the invention.

Figure 16 is a diagrammatic view showing an anti-effraction fence made by using the switches for optical fibres according to the invention.

Figure 17 shows the construction of a pole for the fence according to Figure 16.

Figures 18 and 19 show a modified embodiment of the fence according to Figure 16, in which flexible poles are used for making an anti-effraction fence.

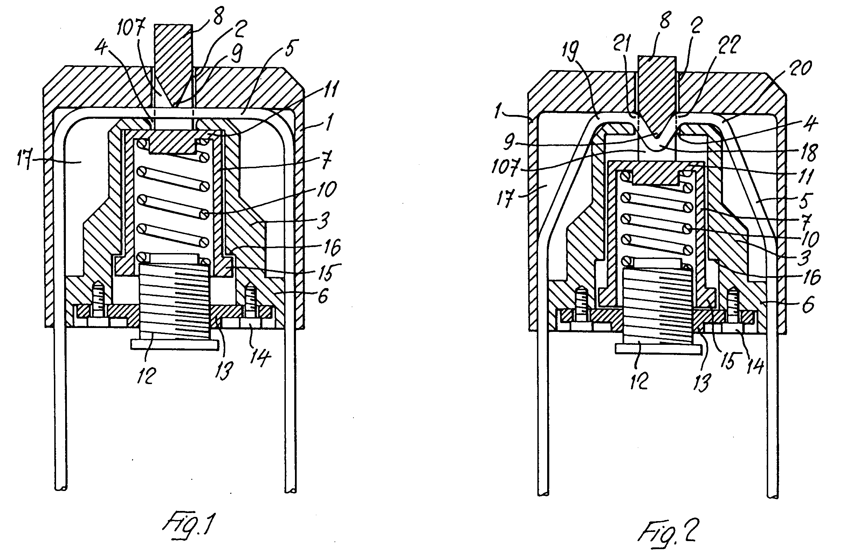

In Figure 1 a sectional view is shown of a first embodiment of the switch according to the invention, in which the conductive position is stable and the interruptive position is unstable. The switch may be made of any material fit for this purpose, particularly of plastics material or of metal. This switch comprises a housing 1 with an opening 2. Provided within the housing 1 is a cup-like, hollow slider-carrying member 3 which may be secured to the housing or may be made of one piece therewith, the top end surface of this member presenting an opening 4 which coincides with the opening 2 in the housing 1. Between the top end surface of the slider-carrying member 3 and the top end wall of housing 1 there is slidably interposed a cable 5 of optical fibres. The optical fibre cable 5 extends along the two lateral walls of housing 1, and at the bottom of housing 1 this cable is slightly pressed at both sides of housing 1, between the sidewalls thereof and cooperating projections 6 in the slider-carrying member 3. Accomodated within the slider-carrying member 3 is a slider 7 with a tapered appendix 8 extending through the coinciding openings 2 and 4 and projecting out of the top end surface of housing 1. Provided in the appendix 8, at the interior of housing 1, are an opening 107 for passing therethrough the optical fibre cable 5 and a deflecting edge 9 formed of one piece with the slider and pointing to the optical fibre cable 5. That portion of the appendix 8 of slider 7 which projects out of the top end surface of housing 1, is made in the manner of a pushbutton.

The slider 7 is of a hollow, cup-like construction, and a spring 10 is arranged therewithin and acts between the top end surface 11 of the slider 7 and a screw 12 for adjusting the preload of spring 10, the said screw being threaded in a matching bore in a bottom plate 13 secured by means of screws 14 to the slider-carrying member 3. The bottom plate 13 forms an abutment for stopping the downward travel of the slider 7, while the abutment for stopping the upward travel of the slider 7 is formed by means of external side projections 15 at the lower end of the slider 7, which cooperate with internal undercuts 16 in the slider-carrying member 3. These projections 15, as well as the appendix 8, may be advantageously made of one piece with the slider 7.

Between the switch housing 1 and the slider-carrying member 3 a hollow space 17 is provided, which allows a certain sideward displacement of the optical fibre cable 5 loosely passed through the said hollow space with a surplus length.

The switch for optical fibres shown in Figure 1 presents a conductive position, so-called stable or rest position, in which the optical fibre cable length which cooperates with the deflecting edge 9 is straight. The slider 7 and thus the deflecting edge 9 are stably kept in rest position thanks to the antagonistic action of spring 10.

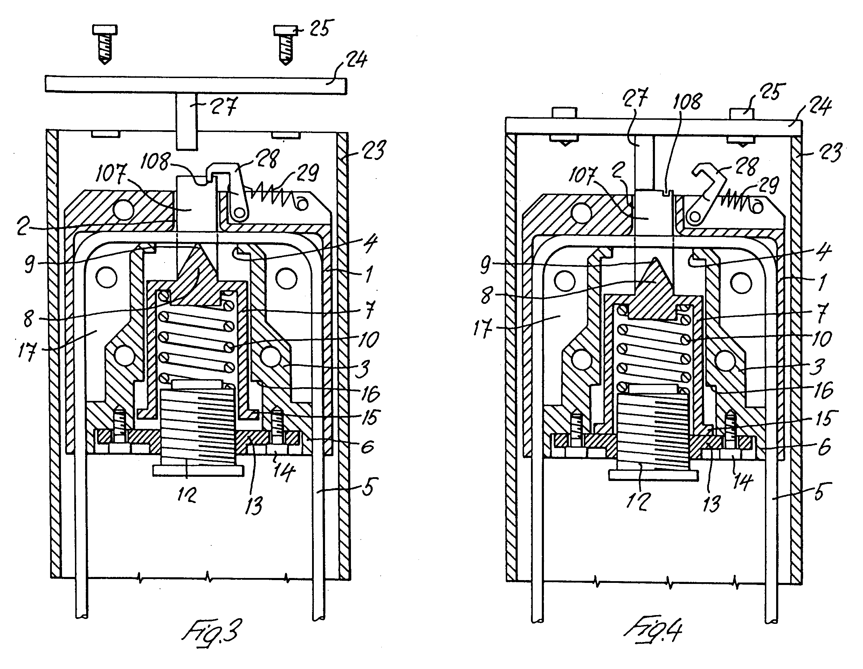

In Figure 2, the switch for optical fibres has been moved into interruptive position by a pressure exerted on the appendix 8, against the counteracting load spring 10, thanks to which this interruptive position is unstable. In this position, the deflecting edge 9 correspondingly deflects the optical fibre cable 5 at point 18, thus causing a longitudinal sliding of said cable and a stretching of its lengths lying within the hollow spaces 17. This results in the optical fibre cable further presenting the deflected points 19, 20 at the outward edges of the top end surface of the slider-carrying member 3, and the deflecting points 21, 22 at the edges of the opening 4 in the slider-carrying member 3. All these deflected points cooperate to the signal attenuation due to a signal dispersion and/or reflection in correspondence of the said deflected points, and in the shown embodiment the said attenuation may be in the order of 3 db.

As soon as a pressure is no more exerted on the appendix 8 of slider 7, the spring 10 returns the slider 7 into rest position, and thanks to the spring-back force of the optical fibre cable 5, the length of this cable which cooperates with the deflecting edge 9, takes again a substantially straight path, so that the signal will be reset substantially to its original level. It was found from a measuring made on prototypes that immediately after the conduction having been restored, the loss of signal is lower than three tenth of db, and this loss is quite gone after a short time.

In a not shown advantageous embodiment, elastic tension means are provided for the optical fibre cable 5 in order to accelerate the total restoring of conduction. These tension means put the optical fibre cable 5 under axial tension, so that the length of cable 5 which cooperates with the deflecting edge 9, is stretched to its original straight shape when the slider 7 is returned by the spring 10 into conductive position (Figure 1). These means may consist, for example, of swingable wings loaded by springs and tending to urge the optical fibre cable against the top end wall of housing 1.

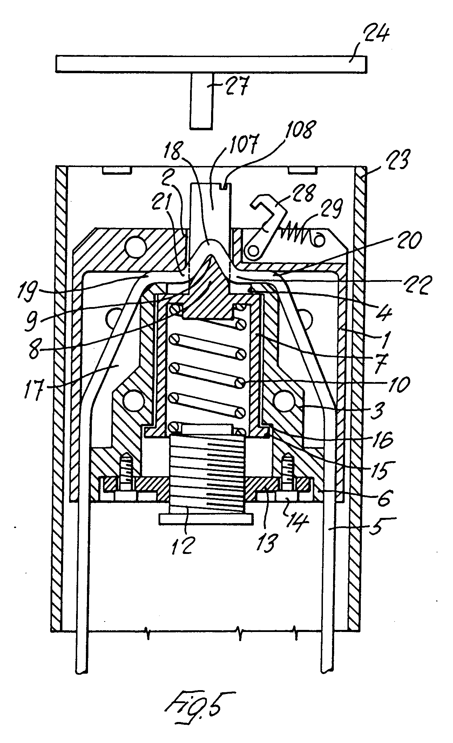

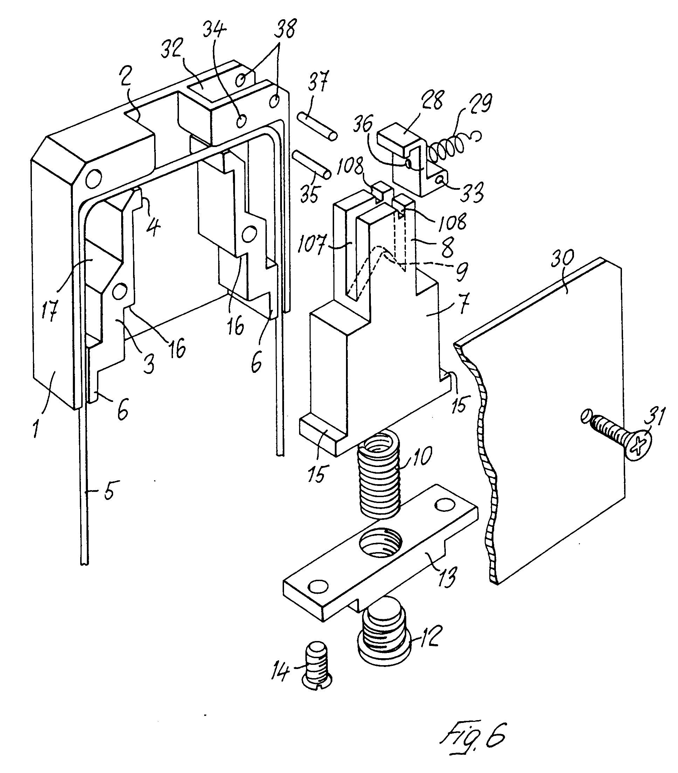

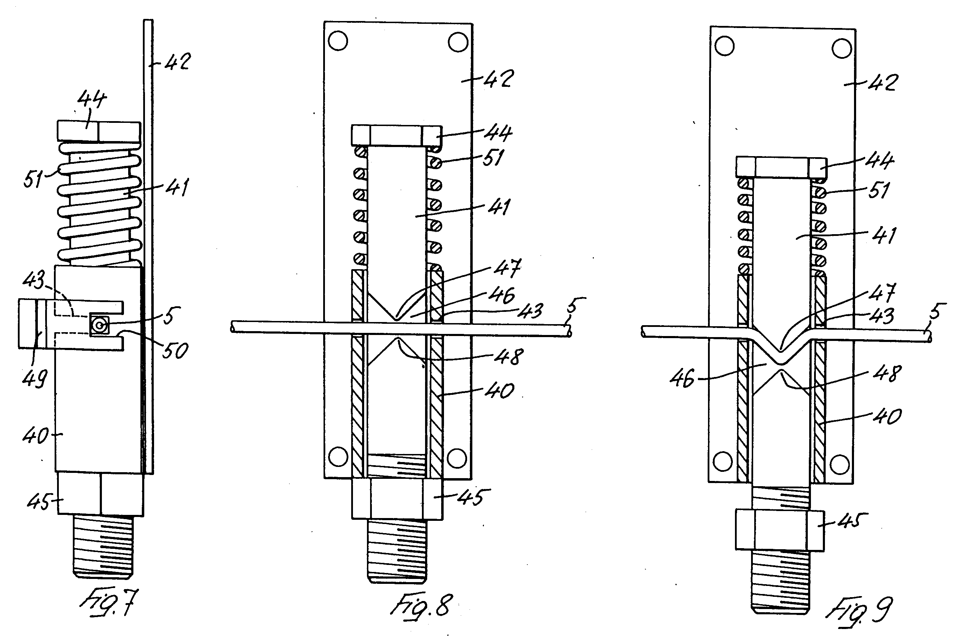

In Figures 3 to 5 there is shown a second embodiment of the switch for optical fibres according to the invention, which is particularly suitable for the application of the switch as a position signaller for doors, covers, drawers, or the like, and which in this case is fitted within a hollow pole 23, to signal the position of a top cover 24 secured by means of screws 25 to said pole. To this end, the switch presents a stable interruptive position, or rest position, and an unstable conductive position. This switch differs in construction from the switch according to Figures 1 and 2 in that the deflecting edge 9 provided at the opening 107 in the appendix 8 of slider 7, is turned toward the exterior of housing 1, so that in rest condition, the spring 10 keeps the deflecting edge 9 pressed against the optical fibre cable, whereby this cable is deflected and the switch is kept in a stable interruptive position, as shown in Figure 5. The conductive position can be obtained by pressing the appendix 8 inwardly of the housing 1, against the action of spring 10, as shown in Figures 3 and 4.

On its side turned toward the pole 23, the cover 24 has an appendix 27, and the switch is mounted at such a distance from the end of pole 23 that when the cover is in assembled condition, the appendix 27 of cover 24 abuts against the appendix 8 of slider 7 and urges this slider into conductive position (Figure 4). On removal of the cover 24 from the pole 23, the appendix 8 of slider 7 is released, and the said slider 7 is urged by the spring 10 into its interruptive position. As it clearly appears in Figure 5, in this interruptive position the optical fibre cable 5 is deflected like in the embodiment shown in Figure 2, i.e., in five points, that is to say, in correspondence of the deflecting edge 9, of the inward edges of the opening 2 in housing 1, and of the side edges of the top end surface of the slider-carrying member 3. Similarly to the embodiment according to Figure 2, the optical fibre cable 5 in its deflected condition is stretched in the hollow spaces 17, that is, it is displaced toward the slider-carrying member 3, and presents an inclined path with respect to the sidewalls of housing 1.

Also in this embodiment, the restoring of the straight path of the optical fibre cable 5 into conductive position, is achieved owing to the elasticity of the material itself, and/or restoring auxiliary tension means (not shown) may be provided.

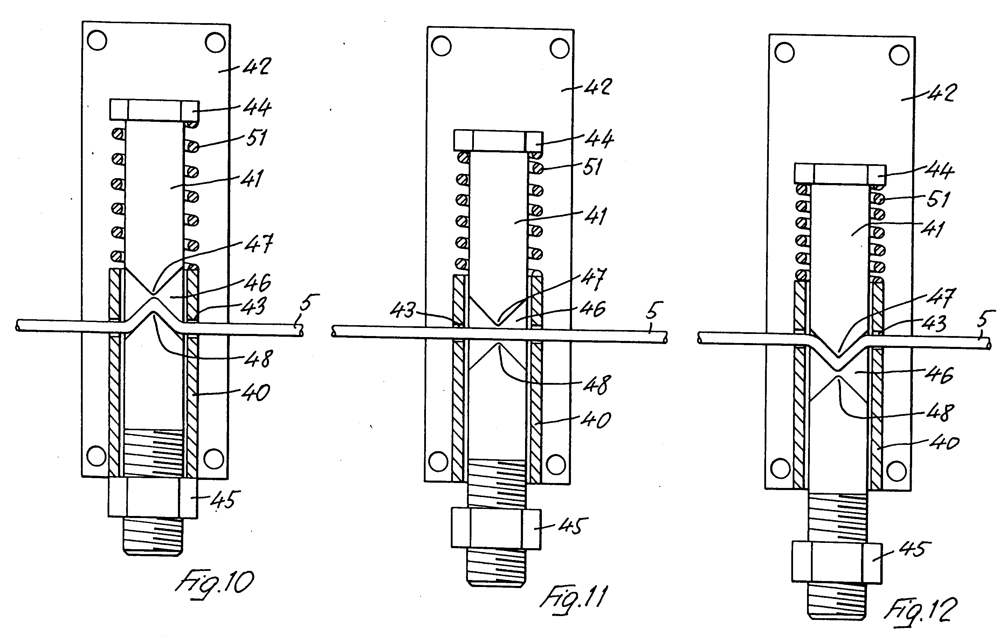

As it clearly appears in Figures 3 to 5, a pawl 28 is mounted in an angularly displaceable mode on the top end wall of housing 1, and the free end of this pawl is engageable in a groove 108 provided in the top end side of the appendix 8 of slider 7, a return spring 29 being connected to said pawl 28. As it clearly appears in Figure 6, one of the large lateral walls 30 of housing 1 is removable, and is fastened to said housing by means of screws 31. The pawl 28 is housed in a recess 32 in the top end wall of housing 1 and it is provided with a transversal through bore 33 coinciding with matching bores 34 in the top end wall of housing 1, for its pivotal connection by means of a pivot 35 to the top end wall of said housing. The pawl 28 has a bore 36 in the wall that is parallel to the small sidewalls of the housing, and one end of spring 29 is fastened in this bore, while the opposite end of spring 29 is fastened to a pin 37 fitted in matching transversal bores 38 in the top end wall of housing 1. In Figure 6 there also clearly appears that the slider 7 has a parallelepipedal shape and that the opening 107 provided in the appendix 8 for passing therethrough the optical fibre cable 5 is made in form of a slot extending from the deflecting edge 9 to the top side of said appendix 8.

Thanks to the pawl 28, the switch can be stably kept in conductive position, while the appendix 27 of cover 24 is of such a length that on being assembled, the same will move the slider 7 inwardly of the housing 1, to such an extent as to cause the disengagement of the pawl 28 from the groove 108 by the action of spring 29, so that the slider 7 will be released. Thanks to this expedient, it is possible to lock the switch in its conductive position, in which the optical fibre cable 5 is not subjected to any stress also during its storage time and fitting up step, thus avoiding any elastic strain of said cable and enabling an automatic unlocking of the switch through the assembly of the cover, without suitable apertures or devices having to be provided for this purpose.

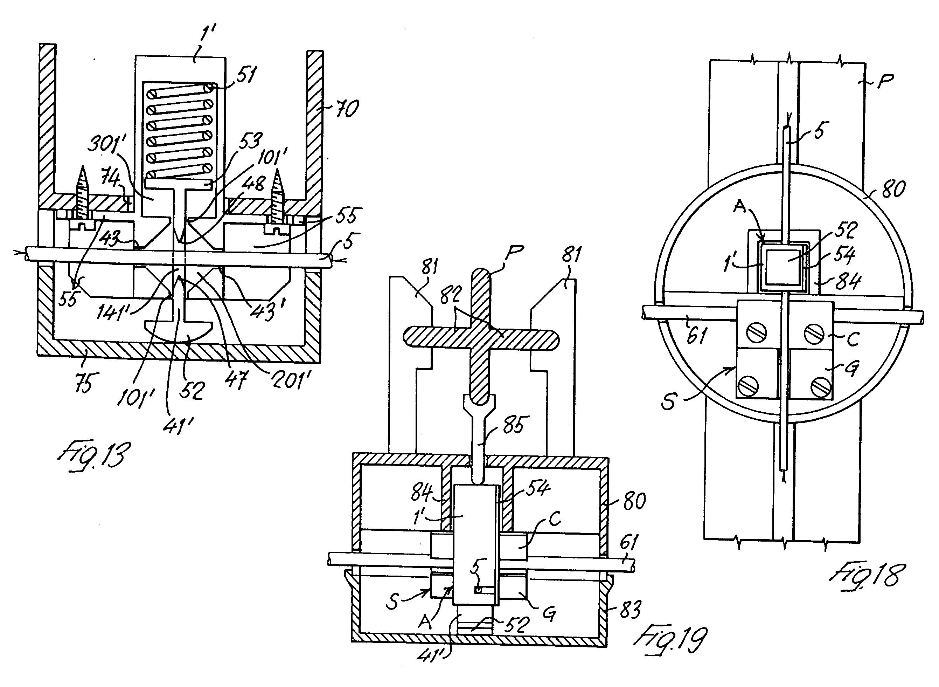

In Figure 7 there is shown a third embodiment of the switch for optical fibres according to the invention, which is a particularly advantageous embodiment, thanks to its simple and economical construction. In this embodiment, the switch for optical fibres consists of a tubular body 40 which may have any internal cross-section, and in which a pin 41 of a matching cross-section is slidably received. In order to avoid a relative rotation between the pin 41 and the tubular body 40, the cooperating portions thereof may have a not round shape, or, when the same are circular in cross-section, guide means (not shown) adapted for preventing their relative rotation, may be provided.

The tubular body 40 is provided with fastening means, particularly a flange 42, and in the region of one end thereof it is provided with a transversal slot 43 for passing therethrough the optical fibre cable 5, the said slot extending for about 180°. On the top of pin 41 there is provided a head 44, and on the opposite threaded end thereof an abutment nut 45 is screwed for adjusting the travel of said pin. In correspondence of the slot 43 in the tubular body 40, the pin 41 has a transversal groove 46 through which the optical fibre cable 5 is passed. The lateral walls of said groove 46 are made in form of spires 47, 48 with their apices being opposed to each other. In order to prevent the optical fibre cable 5 from being sideward displaced, and thus from coming out of the slot 43, a guide fork 49 is fixed in position so as to be superposed to the slot 43, and is provided with a slot 50 of such a width as to allow the optical fibre cable 5 to be passed through the said slot 43. A spring 51 is interposed between the head 44 of pin 41 and the top end surface of the tubular body 40.

The switch according to this embodiment can be set for any different type of operation, by simply screwing or unscrewing the nut 45 which is also apt to adjust any stress in the fibre.

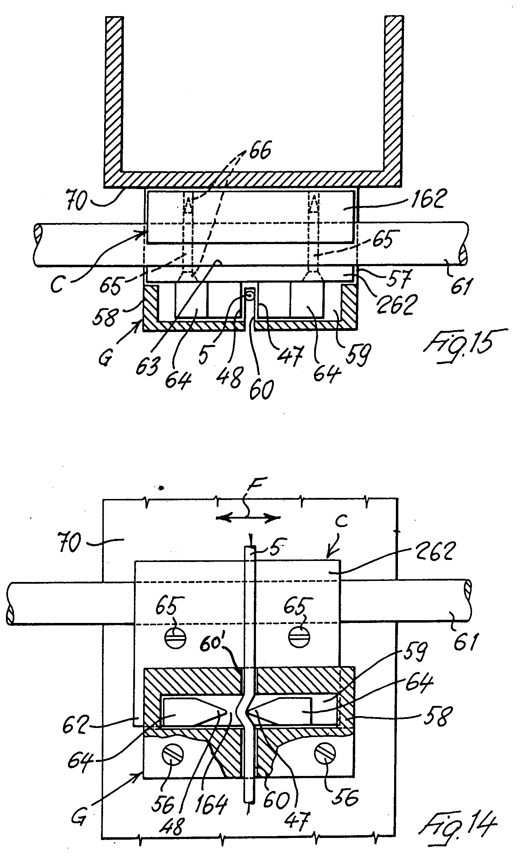

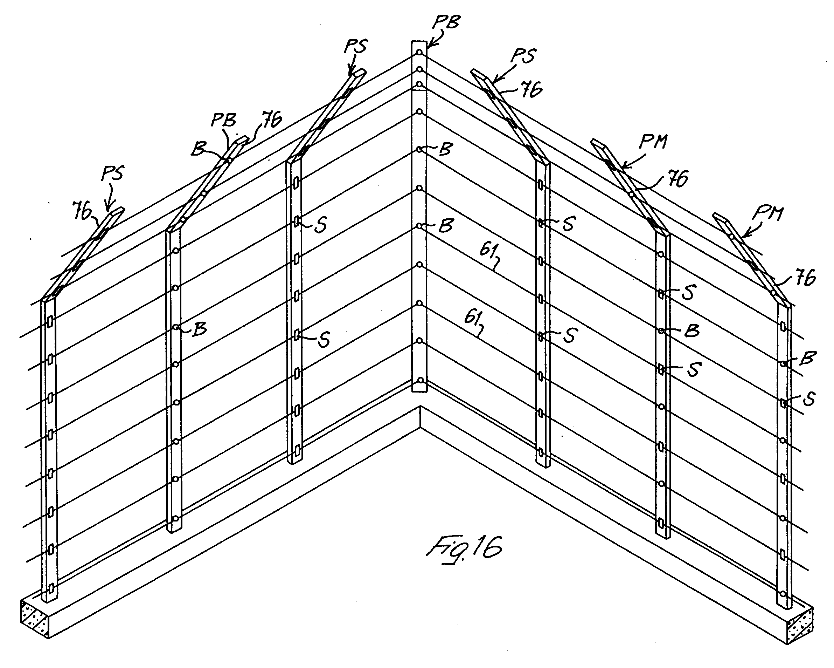

The switch for optical fibres shown in Figure 8 has been set for a type of operation with a stable conductive position and an unstable interruptive position. The nut 45 is screwed on the pin 41 to such an extent that when the nut is set in stopping position, the slot 43 in the tubular body 40 and the groove 46 in the pin will coincide, and such an arrangement will be stably kept by the action of spring 51, so that the cooperating length of the optical fibre cable 5 has a straight path. In order to obtain an interruption of the signal transmitted by the optical fibre cable, a pressure must be exerted on the pin head 44 so as to compress the spring 51, whereby the spire 47 will deflect the optical fibre cable 5 (Figure 9). In this case, the optical fibre cable 5 is deflected in three points, i.e, at the deflecting edge constituted by the spire 47, and at the inner edges of the slot 43 in the tubular body 40. The compressive action on spring 51 having been ceased, this spring resets the conductive position and the cable takes again its straight path, thanks to its own elasticity added to the pushing action of the opposed wedge or spire.

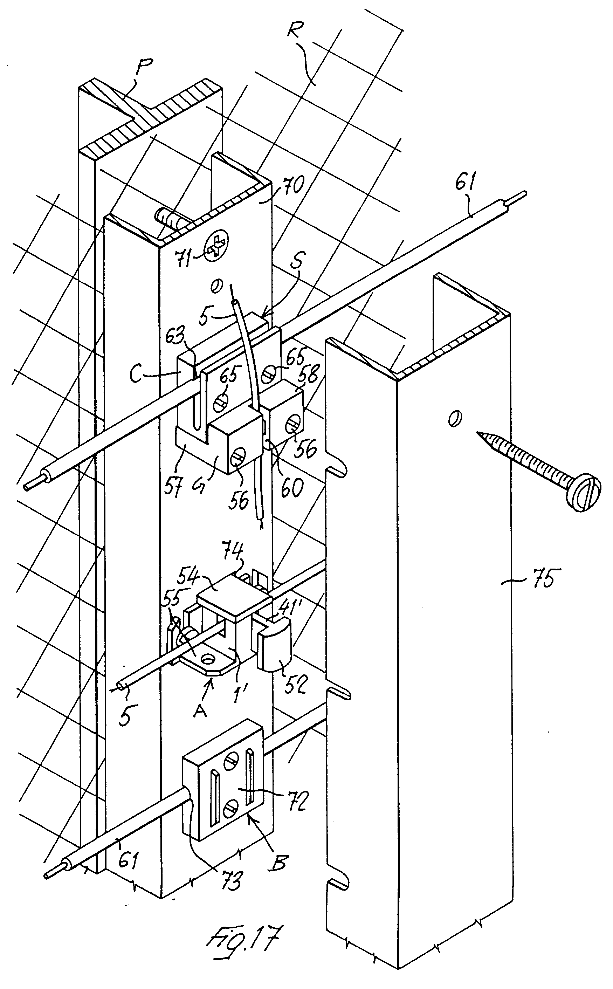

In the switch for optical fibres shown in Figure 10, the nut 45 is screwed on the pin 41 to such an extent that this switch presents a stable interruptive position. With the nut 45 having been set in the position for stopping the pin 41, the deflecting edge constituted by the lower spire 48, is being kept pressed against the optical fibre cable 5 by the spring 51, so that this cable is deflected. By subjecting the pin 41 to such a pressure as to compress the spring, the pin 41 will be shifted to such an extent that an unstable conductive position is firstly obtained (see Figure 11). By further shifting the pin 41, it is possible to compress the spring to a higher degree, so that a transition is again effected to an interruptive, however unstable, position in which the optical fibre cable 5 comes to be deflected by the action of the upper spire 47 (see Figure 12). The pressure on pin 41 having been ceased, this pin is returned by the spring 51 into the stable interruptive position shown in Figure 10.

Figure 13 shows a modified embodiment of the switch for optical fibres according to Figures 10 to 12, which presents a stable interruptive position, an unstable conductive position, and an unstable interruptive position. In this modified embodiment, in lieu of the pin 41, a platelet 41′ is provided which is so mounted as to be longitudinally slidable within the guide openings 101′ in the median zone of one of the end walls of a housing 1′ and in the median zone of an intermediate wall dividing the housing 1′ into two separate compartments 201′ and 301′. The compartment 201′ of housing 1′ is provided in each one of its sidewalls which are parallel to the platelet 41′, with an aperture 43 for an optical fibre cable 5 to be passed therethrough. In the said compartment 201′ the platelet 41′ has a transversally recessed portion 141′, and the walls of said recessed portion which are directed transversely to the sliding direction of platelet 41′, provide the edges for deflecting the optical fibre cable 5, the said walls being tapered wedge-like the one toward the other, so that, similarly to the embodiment according to Figures 10 to 12, these walls constitute the spires 47 and 48. The platelet 41′ is provided at both of its longitudinal ends with a foot-like transversal appendix 52, 53. The transversal appendix 52 is associated with the said platelet 41′ end which projects out of the housing 1′, and the transversal appendix 53 is arranged within the compartment 301′ of housing 1′. By this transversal appendix 53 a limit stop abutment is provided for the sliding movement of platelet 41′, relative to the housing 1′, and a spring 51 is fitted between the said platelet and the associated end wall of housing 1′, the said spring determining the instability of the conductive position and of one of the two interruptive positions, and keeping the platelet in a stable interruptive position.

As it clearly appears particularly from Figures 17 and 18, the housing 1′ is closed with a cover 54, and the apertures 43 are advantageously made in form of slots extending to the free edge of housing 1′, so that a cable of optical fibres 5 can be easily inserted into the said housing 1′ and passed through the said slots 43. Moreover, to fasten the switch in the required operative position, the housing 1′ may be provided with switch-fastening means 55 arranged in any suitable position, particularly at the sides of housing 1′ which are parallel to the platelet 41′. The said switch-fastening means are advantageously made in form of L-shaped brackets, so that they are more rigid and firmer and the switch can be alternatively fixed in two different operative positions at right angles with each other.

The operation of the switch according to this modified embodiment is similar to the operation of the switch of the above disclosed embodiment according to Figures 10 to 12, and so it will be not described here more in detail.

A fourth embodiment of the switch for optical fibres according to the invention is shown in Figures 14 and 15. The switch according to this embodiment, to be described more in detail hereinafter, is particularly adapted for use in an anti-effraction fence as an intrusion-warning sensor, sensing that any cables or wires are being pushed apart. In this switch, antagonistic means, such as springs, or the like, are not provided for rendering stable or unstable, depending on the particular embodiment, the interruptive or conductive positions.

The switch for optical fibres according to Figures 14 and 15, consists of a stationary, switch-fastening and slider-guiding member G and of a slider C for deflecting an optical fibre cable 5, which is slidaly guided within the said stationary slider-guiding member G in both senses of the direction as indicated by arrow F, transversely to the optical fibre cable 5. The movement of the slider C may be controlled in any suitable manner. More particularly, in the application of the switch an anti-effraction fence to be described hereinafter, the movement of the said slider is controlled by the tractive force being longitudinally applied on an elongated element 61, such as a cable, a wire, or the like, which is fastened to the deflecting slider C.

The stationary switch-fastening and slider-guiding member G is L-shaped in cross-section and is secured to any suitable support 70, such as a member which is made integral with a pole P, or the like, by means of screws 56 threaded into matching through bores provided in the leg 57 of the L-shaped member G, which is oriented perpendicularly to the switch-fastening plane 70. The leg 58 of the L-shaped member G extends upwardly from the leg 57 end which is opposite to the support 70, so that this leg 58 is arranged parallel to the switch-fastening plane 70. In the side of leg 58 which is turned toward the said plane, a recess 59 extends transversely to the optical fibre cable 5, whereby a guide is formed for the sliding movement of slider C. A groove 60 for receiving an optical fibre cable 5 is provided in the side of leg 58 which is turned away from the switch-fastening plane 70, and is oriented perpendicularly to the slider guide 59, so that it extends toward the said switch-fastening plane 70, and penetrates to a substantial degree into the slider-guiding recess 59.

The deflecting slider C consists of a wire- or cable-fastening block 62 which is of a height substantially corresponding to the distance between the leg 58 and the switch-fastening plane 70 which is parallel thereto. The said block 62 is provided on the outward edge of its side bearing against the leg 57 of the L-shaped member G, with two appendices 64 which are in line with, and slightly spaced apart form each other in the sliding direction of the slider C (arrow F). The converging sides of said appendices 64 are wedge-like tapered, so that the same constitute the spires 47, 48 which provide the edge for deflecting an optical fibre cable 5 (see Figure 15). These appendices 64 are of such a size that they can be slidably received in the guide formed by the recess 59 in the leg 58 of the L-shaped member G. These appendices 64 limit the travel of slider C in both senses of its sliding direction to a sufficient degree for allowing the optical fibre cable 5 to be deflected, and once the switch has been fixed in position, the same prevent that the slider C may become accidentally disengaged from the switch-fastening and slider-guiding member G. Both the stationary switch-fastening and slider-guiding member G, and the slider C for deflecting an optical fibre cable 5 are advantageously so sized that when the member G and slider C sidewalls which extend in the sliding direction of the slider C are mutually aligned, the gap 164 between the wedge-like tapering appendices 64 of slider C is exactly in line with the groove 60 for accomodating an optical fibre cable 5, so that the switch is in conductive position. Either of the two contrary positions at which the travel of the slider C is stopped, respectively coincides with an interruptive position. Moreover, in order that the slider C may be easily fastened particularly to a cable or wire 61, the wire- or cable-fastening block 62 is made in form of a clamping element with two limbs 162 and 262 which are a little spaced apart from each other and are integrally connected only to that side of block 62 which is associated with the leg 57 of the L-shaped member G, which is perpendicular to the switch-fastening plane 70. The limb 162 is caused to bear against the switch-fastening member 70, and between the facing inward sides of this limb 162 and the limb 262 there is a channel 63 for receiving a cable or wire 61, which is parallel to the sliding direction of the slider C. The two limbs 162 and 262 are provided with a pair of respective co-axial bores 66, and the said two limbs are clamped against each other by means of screws 65 threaded into the said bores 66. The length of screws 65 is such that these screws do not protrude from that side of the limb 162 which bears against the base B, so that they do not block or impede the sliding mevement of the slider C.

The switch for optical fibres according to this fourth embodiment of the invention, may be made from any suitable material, preferably from plastics material, that guarantees a good sliding movement of the slider C, and renders both limbs 162 and 262 of block 62 sufficiently flexible for the control element, which in this case is a cable or wire 61, to be locked into the channel 63 in block 62.

The operation of the switch according to the fourth embodiment of the invention is substantially like the operation of the switch according to the previously disclosed embodiment, but for the omission of an antagonistic means, such as a spring, which determines the instability of one or more positions and the stability of the other positions.

Shown in Figure 16 is an anti-effraction or anti-intrusion fence made by utilizing the switches for optical fibres of the invention, particularly by applying the switches of the embodiments according to Figures 13, and 14, 15. This anti-effraction fence consists of a series of upstanding normal poles PB, PS, PM set on the ground, and a plurality of stretched cables or wires 61 extending transversely to the said poles, and arranged at equispaced intervals from the bottom to the top thereof. More particularly, the regular spacing between these wires 61 is so limited in height that any attempt of a person to get through the anti-effraction fence would be impossible, unless at least two of said wires 61 will be pushed apart. The cables or wires 61 may be normal wires of metal or plastics, or optical fibre cables, or the like. A fencing network of any suitable type may be also fixed to the poles of the anti-effraction fence (see Figure 17).

Clearly shown in Figure 17 is the construction of poles P and the function as performed by the switches for optical fibres according to the invention. Each of the poles P consists of a T-profiled element. The fencing network is attached to the poles P and is clamped with a U-profiled member 70 which by its free edges is secured by means of screws 71 to a pole P, against the flat side of each pole P, which is usually turned inwardly of the fenced area. Fixed in position to the inwardly turned flat side of a U-profiled member 70, are the switch according to Figures 14 and 15, which acts as an intrusion-warning sensor, sensing that any cables or wires 61 are being pushed apart, and the switch for optical fibres according to Figure 13, which acts as a detector A for detecting the removal of the protective covering applied to a pole unit, and consisting of a U-profiled member 75. The locking in position of a cable or wire 61 is achieved simply by means of a platelet 72 which is screwed to the profiled member 70 and is advantageously provided with a groove 73 for the associated cable or wire.

The sensor S, i.e., the switch for optical fibres according to Figures 14 and 15, is so mounted that the sliding direction of the slider C for deflecting an optical fibre cable 5 is parallel to the respective cable or wire 61. The switch for optical fibres according to Figure 13 is partly housed within an aperture 74 in the U-profiled member 70, and is so positioned that the sliding direction of the member for deflecting an optical fibre cable 5 is perpendicular thereto. Moreover, the switch for optical fibres according to Figure 13 is caused to protrude from the inwardly turned surface of the U-profiled member 70, to such an extent that when the protective covering consisting of a U-profiled member 75, is in assembled condition, the said switch is set by the said member 75 in its unstable conductive position. On the covering of a pole being removed therefrom, the switch according to Figure 13 automatically snaps into its stable interruptive position, thus signalling that the covering 75 has been disassembled.

In the fence according to Figure 16, all the poles are provided with at least one detector A for detecting and signalling that the covering 75 has been removed. The sensors S and the points B for the fastening of the wires or cables 61 are so distributed along each single pole that not more than two successive sensors S are provided for each wire or cable 61. In Figure 16 the wire-fastening points B are shown by small circles and the sensors S are shown by small rectangles. Taking into account the condition that it is not possible to provide more than two immediately following sensors S in each wire or cable 61, three types of poles are then provided: the poles bearing the reference PB, with each single wire or cable 61 being fastened thereto; the poles bearing the reference PS, with each cable or wire 61 being fastened thereat to a sensor S; and the poles PM, with each cable or wire 61 being firmly secured thereto, or being fastened to a sensor S in a random arrangement which is just determined by the above-stated condition.

The poles PB, PS, PM according to this embodiment, may be also provided with an inclined upward extension 76 which is made like the above discloded poles. This extension 76 can be advantageously fixed to the associated upstanding pole with the interposition of a switch according to the invention, for signalling that the same is being removed.

Figures 18 and 19 show an embodiment of the anti-effraction fence according to the invention, which is particularly adapted for use with flexible poles. In this embodiment, each sensor S or each horizontal wire-fastening point B is housed in a respective box 80 which by its bottom wall is applied in a predetermined position to a flexible pole P. The flexible pole P has a cross-like shape in horizontal section, and the box 80 is provided with two resilient tongues 81 extending from the box bottom wall which is turned toward the said pole P, and being snappingly engaged on the free edges of the pole flanges 82 which are parallel to the bottom wall of box 80. Similarly to the embodiment according to Figure 17, each box 80 is provided with a detector A, particularly a switch according to Figure 13, for detecting and signalling that the cover 83 is being removed from a box 80, and also that a box 80 is being taken off the respective flexible pole P. The box 80 is then divided into two compartments. One of these compartments is meant for fastening thereto a sensor S, particularly a switch according to Figures 14 and 15, or for fixing thereon a platelet 72, to lock in position a wire of cable 61. In the other compartment of box 80 a tubular guide 84 is provided, which is perpendicular to the flexible pole P and to the outward side of cover 83, and is for guiding the sliding movement of a switch for optical fibres, particularly a switch according to Figure 13, however without its fastening brackets 55. The tubular guide 84 extends to the bottom wall of box 80, in which an opening is provided for an arm 85 having one fork-like outward end. This fork-like outward end of arm 85 is engaged on the free edge of the flexible pole flange which is directed toward the bottom wall of box 80. The opposite inward end of the said arm 85 bears against the inward end side of the housing 1′ for a switch for optical fibres. Thus, when a switch for optical fibres is in assembled condition, this switch is held in its stable conductive position, between the cover 83 and the associated inward end of arm 85. On the cover 83 being removed, the deflecting member of the switch, i.e., the platelet 41′, is free to move from its unstable conductive position to its stable interruptive position, so that it signals the removal of cover 83. As the box 80 is being detached from a flexible pole P, the arm 85 is no more retained by the said pole P, and the deflecting member is allowed to move into its stable interruptive position, so that the switch will slide toward the bottom wall of box 80.

Thanks to this devised arrangement, it is possible to make an equaly safe anti-effraction fence with an arrangement of its components as in Figure 16, however with the flexibility of its poles and then of the fence itself, being not impaired. Moreover, since a tractive force is longitudinally exterted on the cables or wires 61 when a flexible pole is being bent, the sensors S not only signal that these cables or wires are being divaricated, but also that the flexible poles are being substantially bent.

In the foregoing description there clearly appear the advantages of the switch for optical fibres according to the invention, which not only is of a very simple construction, but also affords a great flexibility in its application. The said switch is particularly adapted for an application to an anti-effraction fence in which an optical fibre system is used. Moreover, the particular, just described and shown anti-effraction fence can be fixed in position in a very simple low-cost manner even on existing fencing networks.

## Claims

1. A switch for optical fibres, comprising:
a) a cable-deflecting member (7, 41, 41', 64, C) movably accomodated in a housing (1, 1', 40, G), and provided with a first opening (107, 46, 141', 164) through which an optical fibre cable (5) for the transmission of signals is passed,
b) a second opening (43, 60) provided in a stationary part of the housing (1, 1', 40, G), adjacent to the cable-deflecting member (7, 41, 41', C) and close to said first opening (107, 46, 141', 164), and through which said optical fibre cable is passed,
c) means for moving the cable-deflecting member (7, 41, 41', 64, C) transversally with respect to said optical fibre cable (5) into a conductive position in which the path of the portion of said optical fibre cable which is engaged with the deflecting member is substantially straight, and into at least one interruptive position in which an edge of said first opening (107, 46, 141', 164) deflects said portion of said optical fibre cable (5), in such a manner that owing to a signal dispersion at the bend in the deflected portion of the optical fibre cable the transmitted signal is attenuated below a predetermined threshold value,
characterized in that
d) a third opening (43', 60') aligned with said second opening (43, 60) is provided in a stationary part of the housing (1, 1', 40, G), adjacent to the cable-deflecting member (7, 41, C) on the side thereof which is opposite to the stationary part provided with said second opening (43, 60), and through which said optical fibre cable (5) is passed,
e) said first opening (107, 46, 141', 164) has on at least one side adjacent to said optical fibre cable (5) a triangular profile in longitudinal section, with the apex of the triangular profile forming a cable-deflecting edge (9, 47; 48) which is directed to the optical fibre cable (5) and extends transversally thereto.

2. The switch according to claim 1, characterized in that said first opening (46, 171', 164) has on two opposite sides adjacent to said optical fibre cable (5) a triangular profile in longitudinal section, the spaced apart, opposed apices of these two triangular profiles forming two cable-deflecting edges (9; 47, 41) which from opposite sides are directed to the optical fibre cable (5) and extend transversally thereto, the cable-deflecting member (41, 41', 64, C) being movable into a conductive median position, and into two different, opposite interruptive positions.

3. The switch according to claim 1 or 2, characterized in that the cable-deflecting member (7, 41, 41') is urged by a spring (10, 51) to its conductive position in which it is stopped by means of abutments, and is movable into an interruptive position by the action of an external force counteracting the bias of said spring (10, 51).

4. The switch according to claim 1 or 2, characterized in that the cable-deflecting member (7, 41') is urged by a spring (10, 51) to an interruptive position, and is held in its conductive position by removable abutments (27, 24; 75).

5. The switch according to claim 1, characterized in that the second opening and the third opening provided in stationary parts of the housing are formed between an endwall of said housing (1) and the corresponding endwall of a stationary guide member (3) which is accomodated and fastened in said housing (1), the cable-deflecting member (7) being slidably mounted in said guide member (3), transversally to the said openings and extending through holes (2, 4) provided in the endwall of the housing (1) and in the endwall of the guide member (3).

6. The switch according to claims 1, 4, and 5, caracterized in that locking means are provided on the housing (1) for locking the cable-deflecting member (7) in its conductive position, and these locking means are in form of a pawl (28) being pivotally connected to the outer side of housing (1) and cooperating with a groove (108) provided in the outward end surface of the cable-deflecting member (7), which pawl (28), by being engaged in said groove (108), holds the cable-deflecting member (7) in its conductive position against the bias of an internally located spring (10) urging outwardly the cable-deflecting member (7) to its interruptive position, said pawl (28) being disengaged from said groove (108) by the action of a return spring (29), after a limited inward displacement of the cable-deflecting member (7), against the bias of the said spring (10).

7. The switch according to claims 1 to 4, characterized in that the cable-deflecting member is in form of a pin (41), and said first opening is in form of a transversal groove (46) provided in the pin, said pin (41) seing slidably accomodated in a tubular body (40) formed with a transversal slot (43) extending over about 180°, and providing said second opening and said third opening, a spring (51) being fitted between the head (44) of said pin (41) and the associated end surface of the tubular body (40), and an abutment nut (45) that cooperates with the opposite end surface of the tubular body (40) being screwed on the end of said pin (1) opposite to the pin head (44).

8. The switch according to claims 1 to 4, characterized in that the cable-deflecting member is in form of a platelet (41') provided with said first opening (141') and slidably mounted into aligned openings (101') in an endwall and in an intermediate wall of the housing (1'), two opposite sidewalls of the housing (1'), that are parallel to the platelet (41'), being provided in the region of said first opening (141'), with said second and third openings (43) and said platelet (41') being formed at its end located within a compartment (301') delimited by the intermediate wall and the other endwall of the housing (1'), with a transversally extending appendix (53), a spring (51) being provided between said appendix (53) and said other endwall of the housing (1').

9. The switch according to claims 1 and 2, characterized in that the switch housing consists of an L-shaped member (G) which is attached to a switch-fastening plane (70), with its one leg (57) being perpendicular to the switch-fastening plane (70), and with its other leg (58) being arranged parallel to, and at a distance therefrom, and being formed in its side turned toward the plane (70), with a recess (59) in which the cable-deflecting member (64) is mounted so as to be slidable in a parallel relation with the switch-fastening plane (70), in the longitudinal direction of the L-shaped member (G), the cable-deflecting member (64) being formed in its side that is opposite to the switch-fastening plane (70), with a transveral groove (164) providing said first opening, and the leg (58) of the L-shaped member (G), arranged parallel to the switch-fastening plane (70), being formed in the side which is opposite to the plane (70), with a transversal slot (60) providing said second opening and said third opening, and the cable-deflecting member (64) being connected to a supporting and guiding block (62) which is slidably mounted between the switch-fastening plane (70) and the leg (58) of the L-shaped member (G), arranged parallel to the plane (70), and being connected to a control element, such as a cable or wire (61) or the like, extending transversally to said optical fibre cable (5) and parallelly to the switch-fastening plane (70), and being movable in the direction of its lengthwise extension.

10. An anti-intrusion fence consisting of a row of up-standing poles (PS,PB,PM) with a fencing network being applied thereto, each of said poles having a hollow construction and a removable covering (75) on one of the sides parallel to the fence, said fence being provided with a plurality of horizontally arranged, vertically equidistant wires (61, 5) which are stretched along the said pole rows, some of these wires being optical fibre cables (5), and the said wires being locked in position to said poles being capable to control intrusion-warning sensors accomodated in the inside of the poles by sensing that one of the wires is being pushed apart, wherein the sensor associated with one wire (61) is in form of a switch according to claim 9, with its L-shaped member (G) being fastened to a vertical inner surface (70) of a pole, and with its supporting and guiding block (62) slidably mounted between the said surface (70) of a pole and the leg (58) of the L-shaped member (G), and being connected to the wire (G1) of the fence.

11. An anti-intrusion fence consisting of a row of up-standing poles (PS,PB,PM) with a fencing network being applied thereto, each of said poles having a hollow construction and a removable covering (75) on one of the sides parallel to the fence, said fence being provided with a plurality of horizontally arranged, vertically equidistant wires (61, 5) which are stretched along the said pole rows, some of these wires being optical fibre cables (5), and the said wires being locked in position to said poles being capable to control intrusion-warning sensors accomodated in the inside of the poles by sensing that one of the wires is being pushed apart, wherein the sensor associated with a wire of the fence, consisting of an optical fibre cable (5), is in form of a switch according to claim 8, with its housing (1') being fastened to a vertical inner surface (70) of a pole, and with its cable-deflecting member (41') abutting by the end (52) opposite to the spring (51) from the interior of the pole against the removable covering (75) thereof, and being held by this covering in its conductive position, against the bias of the spring (51).

## Patentansprüche

1. Schalter für optische Fasern, mit:
a) einem ein Kabel biegendes Teil (7, 41, 41', 64, C), welches in einem Gehäuse (1, 1', 40, G) bewegbar aufgenommen ist, versehen mit einer ersten Öffnung (107, 46, 141', 164), durch welche ein optisches Faserkabel (5) für die Durchleitung von Signalen hindurchgeführt ist,
b) einer zweiten Öffnung (43, 60), die in einem stationären Teil des Gehäuses (1, 1', 40, G) neben dem das Kabel biegenden Teil (7, 41, 41', C) und dicht an der ersten Öffnung (107, 46, 141', 164) angeordnet ist und durch welches das optische Faserkabel hindurchgeführt ist,
c) einer Einrichtung zum Bewegen des das Kabel biegenden Teiles (7, 41, 41', 64, C) in Querrichtung bezüglich des optischen Faserkabels (5) in eine leitfähige Position, in welcher der Weg des Abschnittes des optischen Faserkabels, welcher mit dem Biegeteil in Eingriff steht, im wesentlichen gerade ist, und in zumindest einer Unterbrechungsposition, in welcher eine Kante der ersten Öffnung (107, 46, 141', 164) diesen Abschnitt des optischen Faserkabels (5) abbiegt in der Weise, daß aufgrund der Signaldispersion an der Biegung in dem abgebogenen Abschnitt des optischen Faserkabels das durchgeleitete Signal unter einen vorbestimmten Grenzwert herab abgeschwächt ist,
dadurch gekennzeichnet, daß
d) eine dritte Öffnung (43', 60'), die mit der zweiten Öffnung (43, 60) ausgerichtet ist, in einem stationären Teil des Gehäuses (1, 1', 40, G) vorgesehen ist, und zwar neben dem das Kabel abbiegenden Teil (7, 41, C) auf der Seite desselben, welche dem stationären Teil gegenüberliegt, welcher mit der zweiten Öffnung (43, 60) versehen ist, und durch welche das optische Faserkabel (5) hindurchgeführt ist,
e) wobei die erste Öffnung (107, 46, 141', 164) zumindest auf einer Seite neben dem optischen Faserkabel (5) im Längsschnitt ein dreieckiges Profil hat, wobei die Spitze des dreieckigen Profils eine das Kabel abbiegende Kante (9, 47; 48) bildet, die auf das optische Faserkabel (5) gerichtet ist und sich quer zu diesem erstreckt.

2. Schalter nach Anspruch 1, dadurch gekennzeichnet, daß die erste Öffnung (46, 171', 164) an zwei gegenüberliegenden Seiten neben dem optischen Faserkabel (5) ein im längsschnitt dreieckiges Profil hat, wobei die voneinander beabstandeten, gegenüberliegenden Spitzen dieser beiden dreieckigen Profile zwei das Kabel biegende Kanten (9; 47,41) bilden, die von gegenüberliegenden Seiten auf das optische Faserkabel (5) gerichtet sind und sich quer zu diesem erstrecken, wobei das das Kabel biegende Teil (41, 41', 64, C) in eine leitfähige Mittelposition und in zwei verschiedene, entgegengesetzte Unterbrechungspositionen bewegbar ist.

3. Schalter nach Anspruch 1 oder 2, dadurch gekennzeichnet, daß das das Kabel biegende Teil (7, 41, 41') durch eine Feder (10, 51) in seine leitfähige Position gedrückt wird, in welcher es durch Anschlageinrichtungen gestoppt wird, und daß es unter der Wirkung einer äußeren Kraft, welche der Vorspannung der Feder (10, 51) entgegenwirkt, in eine Unterbrechungsposition bewegbar ist.

4. Schalter nach Anspruch 1 oder 2, dadurch gekennzeichnet, daß das das Kabel biegende Teil (7, 41') durch eine Feder (10, 51) in eine Unterbrechungsposition gedrückt wird, und daß es durch wegbewegbare Anschläge (27, 24; 75) in seiner leitfähigen Position gehalten wird.

5. Schalter nach Anspruch 1, dadurch gekennzeichnet, daß die zweite Öffnung und die dritte Öffnung, welche in stationären Teilen des Gehäuses vorgesehen sind, zwischen einer Stirnwand des Gehäuses (1) und der entsprechenden Stirnwand eines stationären Führungsteiles (3) ausgebildet sind, welches in dem Gehäuse (1) aufgenommen und befestigt ist, wobei das das Kabel biegende Teil (7) gleitbar in dem Führungsteil (3) montiert ist, und zwar in Querrichtung zu den Öffnungen, und sich durch Löcher (2, 4) erstreckt, welche in der Stirnwand des Gehäuses (1) und in der Stirnwand des Führungsteils (3) vorgesehen sind.

6. Schalter nach den Ansprüchen 1, 4 und 5, dadurch gekennzeichnet, daß eine Verriegelungseinrichtung an dem Gehäuse (1) für das Verriegeln des das Kabel abbiegenden Teiles (7) in seiner leitfähigen Position vorgesehen ist und daß diese Verriegelungseinrichtungin Form einer Klinke (28) vorliegt, welche schwenkbar mit der Außenseite des Gehäuses (1) verbunden ist und mit einer Nut (108) zusammenwirkt, die in der äußeren Stirnfläche des das Kabel abbiegenden Teiles (7) vorgesehen ist, wobei die Klinke (28) durch Eingriff in die Nut (108) das das Kabel abbiegende Teil (7) in seiner leitfähigen Position gegen die Vorspannung einer im Inneren angeordneten Feder (10) hält, welche das das Kabel abbiegende Teil (7) nach außen in seine Unterbrechungsposition drückt, wobei die Klinke (28) mit der Nut (108) durch die Wirkung einer Rückhoffeder (29) außer Eingriff gebracht wird nach einer begrenzten Einwärtsverschiebung des das Kabel abbiegenden Teiles (7), gegen die Vorspannung der oben erwähnten Feder (10).

7. Schalter nach den Ansprüchen 1 bis 4, dadurch gekennzeichnet, daß das das Kabel abbiegende Teil in Form eines Stiftes (41) vorliegt und daß die erste Öffnung in Form einer Quernut (46) vorliegt, welche in dem Stift vorgesehen ist, wobei der Stift (41) gleitbar in einem rohrförmigen Korpus (40) aufgenommen ist, der mit einem Querschlitz (43) ausgebildet ist, welcher sich über etwa 180° erstreckt, und daß die zweite Öffnung und die dritte Öffnung vorgesehen sind, wobei eine Feder (51) zwischen dem Kopf (44) des Stiftes (41) und der zugehörigen Stirnfläche des rohrförmigen Korpus (40) eingepaßt ist, und daß eine Anschlagmutter (45) vorgesehen ist, die mit der gegenüberliegenden Stirnfläche des rohrförmigen Korpus (40) zusammenwirkt, welcher auf das Ende des Stiftes (1) aufgeschraubt ist, welches dem Kopf (44) des Stiftes gegenüberliegt.

8. Schalter nach den Ansprüchen 1 bis 4, dadurch gekennzeichnet, daß das das Kabel abbiegende Teil in Form eines Plättchens (41') vorliegt, welches an der ersten Öffnung (141') vorgesehen ist und gleitbar in ausgerichteten Öffnungen (101') in einer Stirnwand und einer Zwischenwand des Gehäuses (1') montiert ist, wobei zwei gegenüberliegende Seitenwände des Gehäuses (1'), welche parallel zu dem Plättchen (41') sind, in dem Bereich der ersten Öffnung (141') mit den zweiten und dritten Öffnungen (43) versehen sind und das Plättchen (41') an seinem in einem Behältnis (301'), welches durch die Zwischenwand und die andere Stirnwand des Gehäuses (1') begrenzt wird, angeordneten Ende mit einem sich quer erstreckenden Ansatz (53) ausgebildet ist, wobei eine Feder (51) zwischen dem Ansatz (53) und der anderen Stirnwand des Gehäuses (1') vorgesehen ist.

9. Schalter nach den Ansprüchen 1 und 2, dadurch gekennzeichnet, daß das Schaltergehäuse aus einem L-förmigen Teil (G) besteht, welches an einer Schalterbefestigungsebene (70) angebracht ist, wobei sein einer Schenkel (57) sich senkrecht zu der Schalterbefestigungsebene (70) erstreckt und sein anderer Schenke parallel und beabstandet zu dieser angeordnet ist und auf seiner der Ebene (70) zugewandten Seite mit einer Aussparung (59) ausgebildet ist, in welcher das das Kabel abbiegende Teil (64) so montiert ist, daß es parallel zu der Schalterbefestigungsebene (70) in Längsrichtung des L-förmigen Teiles (G) gleitbar ist, wobei das das Kabel abbiegende Teil (64) auf der Seite ausgebildet ist, welche der Schalterbefestigungsebene (70) abgewandt ist, wobei eine Quernut (164) in der ersten Öffnung vorgesehen ist und der Schenke (58) des L-förmigen Teiles (G), welcher parallel zu der Schalterbefestigungsebene (70) angeordnet ist, auf der der Ebene (70) abgewandten Seite mit einem Querschlitz (60) ausgebildet ist, welcher die zweite Öffnung und die dritte Öffnung bereitstellt, und wobei das das Kabel abbiegende Teil (64) mit einem Stütz- und Führungsblock (62) verbunden ist, der gleitbar zwischen der Schalterbefestigungsebene (70) und dem Schenkel (58) des L-förmigen Teils (G), welcher parallel zu der Ebene (70) angeordnet ist, montiert ist und mit einem Steuerelement verbunden ist, wie z.B. einem Kabel oder Draht (61) oder dergleichen, welches sich quer zu dem optischen Faserkabel (5) und parallel zu der Schalterbefestigungsebene (70) erstreckt und in Richtung seiner Längserstreckung bewegbar ist.

10. Antieinbruchszaun, welcher aus einer Reihe aufrechtstehender Pfosten (PS, PB, PM) besteht, mit einem daran angebrachten Zaunnetzwerk, wobei jeder Pfosten hohl ist und eine entfernbare Abdeckung (75) auf einer der parallel zum Zaun verlaufenden Seiten hat, wobei der Zaun mit einer Mehrzahl von horizontal angeordneten, in Vertikalrichtung gleichmäßig beabstandeten Drähten (61, 5) versehen ist, welche entlang der Pfostenreihen gestreckt sind, wobei einige dieser Drähte optische Faserkabel (5) sind und wobei diese Drähte, welche in ihrer Position an den Pfosten befestigt sind, in der Läge sind, Einbruchswarnsensoren zu steuern, die im Inneren der Pfosten aufgenommen sind, indem sie erfassen, daß einer der Drähte beiseite gedrückt wird, wobei der Sensor, der zu einem Draht (61) gehört, in Form eines Schalters gemäß Anspruch 9 vorliegt, dessen L-förmiges Teil (G) an einer vertikalen, inneren Fläche (70) eines Pfostens befestigt ist und dessen Stütz- und Führungsblock (62) gleitbar zwischen der Fläche (70) eines Pfostens und dem Schenkel (58) des L-förmigen Teils (G) montiert und mit dem Draht (G1) des Zaunes verbunden ist.

11. Antieinbrauchszaun, welcher aus einer Reihe von aufrechtstehenden Pfosten (PS, PB, PM) mit einem daran angebrachten Zaunnetzwerk besteht, wobei jeder der Pfosten einen hohlen Aufbau hat und eine abnehmbare Abdeckung (75) auf einer seiner parallel zum Zaun verlaufenden Seiten, wobei der Zaun mit einer Mehrzahl von horizontal angeordneten, in Vertikalrichtung gleichmäßig beabstandeten Drähten (61, 5) versehen ist, die entlang der Pfostenreihen ausgespannt sind, wobei einige dieser Drähte optische Faserkabel (5) sind und wobei die Drähte, welche an ihrem Platz an den Pfosten befestigt sind, in der Läge sind, Einbruchswarnsensoren zu steuern, welche im Inneren der Pfosten aufgenommen sind, indem sie erfassen, daß einer der Drähte weggedruckt wird, wobei der Sensor, welcher zu dem aus einem optischen Faserkabel (5) bestehenden Draht des Zaunes besteht, in Form eines Schalters gemäß Anspruch 8 vorliegt, dessen Gehäuse (1') an einer vertikalen inneren Fläche (70) eines Pfostens befestigt ist und dessen das Kabel biegende Teil (41') mit dem der Feder (51) abgewandten Ende (52) vom Inneren des Pfostens her an die abnehmbare Abdeckung (75) anstößt und durch diese Abdeckung in seiner leitfähigen Position gegen die Vorspannung der Feder (51) gehalten wird.

## Revendications

1. Interrupteur pour fibres optiques comprenant :
a) un élément de déformation de câble (7, 41, 41', 64, C) reçu de manière déplaçable dans un boitier (1, 1', 40, G), et prévu avec une première ouverture (107, 46, 141', 164) à travers laquelle un câble à fibres optiques (5) pour la transmission de signaux est passé,
b) une seconde ouverture (43, 60) prévue dans une partie fixe du boitier (1, 1', 40, G) contigu à l'élément de déformation de câble (7, 41, 41', C) et près de ladite première ouverture (107, 46, 141', 164) et à travers laquelle le câble à fibres optiques est passé,
c) un moyen pour déplacer l'élément de déformation de câble (7, 41, 41', 64, C) transversalement par rapport audit câble à libres optiques (5) en une position conductrice dans laquelle le trajet de la partie dudit câble à libres optiques qui est engagé avec l'élément de déformation est pratiquement droit, et en au moins une position d'interruption dans laquelle un bord de ladite première ouverture (107, 46, 141', 164) dévie ou déforme ladite partie dudit câble à libres optiques (5) d'une manière telle que, dû à la dispersion du signal à la courbure dans la partie déformée du câble à libres optiques, le signal transmis est affaibli au-dessous d'une valeur de seuil prédéterminée,
caractérisé en ce que :
d) une troisième ouverture (43', 60') alignée avec ladite seconde ouverture (43, 60) est prévue dans une partie fixe du boîtier (1, 1', 40, G) contigu à l'élément de déformation du câble (7, 41, C) sur son côté qui est opposé à la partie fixe munie de ladite seconde ouverture (43, 60) et à travers laquelle ledit câble à libres optiques (5) est passé,
e) ladite première ouverture (107, 46, 141', 164) présente sur au moins un de ses côtés contigus audit câble à fibres optiques (5) un profil triangulaire en section longitudinale, avec le sommet du profil triangulaire formant un bord de déformation de câble (9, 47 ; 48) qui est dirigé vers le câble à fibres optiques (5) et s'étend transversalement à celui-ci.

2. Interrupteur selon la revendication 1, caractérisé en ce que ladite première ouverture (46, 171', 164) comporte sur deux côtés opposés contigus audit câble à fibres optiques (5) un profil triangulaire en section longitudinale, les sommets espacés opposés de ces deux profils triangulaires formant deux bords de déformation de câble (9 ; 47, 41) qui à partir des côtés opposés sont dirigés vers le câble à fibres optiques (5) et s'étendent transversalement à celui-ci, l'élément de déformation de câble (41, 41', 64, C) étant déplaçable en une position médiane conductrice, et en deux positions d'interruption différentes opposées.

3. Interrupteur selon la revendication 1 ou 2, caractérisé en ce que l'élément de déformation du câble (7, 41, 41') est poussé par un ressort (10, 51) à sa position conductrice dans laquelle il est arrêté aux moyens de butées, et est déplaçable à une position d'interruption par l'action d'une force externe agissant contre la sollicitation dudit ressort (10, 51).

4. Interrupteur selon la revendication 1 ou 2, caractérisé en ce que T'élément de déformation du câble (7, 41') est poussé par un ressort (10, 51) vers une position d'interruption, et est maintenu à sa position conductrice par des butées enlevables (27, 24 ; 75).

5. Interrupteur selon la revendication 1, caractérisé en ce que la seconde ouverture et la troisième ouverture prévues dans les parties fixes du boîtier, sont formées entre une paroi d'extrémité dudit boîtier (1) et la paroi d'extrémité correspondante d'un élément de guidage fixe (3) qui est reçu et fixé dans ledit boîtier (1), l'élément de déformation du câble (5) étant monté de manière coulissante dans ledit élément de guidage (3) transversalement auxdites ouvertures et se prolongeant à travers des trous (2, 4) prévus dans la paroi d'extrémité du boitier (1) et dans la paroi d'extrémité de l'élément de guidage (3).

6. Interrupteur selon les revendications 1, 4 et 5, caractérisé en ce que des moyens de blocage sont prévus sur le boitier (1) pour bloquer l'élément de déformation du câble (7) dans sa position conductrice et ces moyens de blocage sont sous la forme d'un cliquet (28) qui est connecté de manière pivotante au côté extérieur du boîtier (1) et coopére avec une rainure (108) prévue dans la surface d'extrémité vers l'extérieur de l'élément de déformation du câble (7), lequel cliquet (28) lorsqu'il est encliqueté dans ladite rainure (108) maintient l'élément de déformation du câble (7) dans sa position conductrice contre la sollicitation d'un ressort internement placé (10) poussant vers l'extérieur l'élément de déformation du câble (7) vers sa position d'interruption, le cliquet (28) étant décliqueté de la rainure (108) par l'action d'un ressort de rappel (29), après un déplacement vers l'intérieur limité de T'élément de déformation du câble (7) contre la sollicitation dudit ressort (10).

7. Interrupteur selon les revendications 1 à 4, caractérisé en ce que l'élément de déformation du câble est sous la forme d'une broche (41) et en ce que ladite première ouverture est sous la forme d'une rainure transversale (46) prévue dans la broche, ladite broche (41) étant reçue de manière coulissante dans un corps tubulaire (40) formé avec une lente transversale (43) s'étendant sur un angle d'environ 180°, et procurant ladite seconde ouverture et ladite troisième ouverture, un ressort (51) étant placé entre la tête (44) de ladite broche (41) et la surface d'extrémité associée du corps tubulaire (40), et un écrou de butée (45) qui coopère avec la surface d'extrémité opposée du corps tubulaire (40) étant vissée sur l'extrémité de ladite broche (1) opposée à la tête de broche (44).

8. Interrupteur selon les revendications 1 à 4, caractérisé en ce que l'élément de déformation du câble est sous Ta forme d'une plaquette (41') munie de ladite première ouverture (141') et monté de manière coulissante dans des ouvertures alignées (101') dans une paroi d'extrémité et dans une paroi intermédiaire du boîtier (1'), deux parois latérales opposées du boîtier (1') qui sont parallèles à la plaquette (41') étant prévues dans la région de ladite première ouverture (141'), les seconde et troisième ouvertures (43) et ladite plaquette (41') étant formées à son extrémité placée à l'intérieur d'un compartiment (301') délimité par la paroi intermédiaire et l'autre paroi d'extrémité du boîtier (1'), avec un appendice se prolongeant transversalement (53), un ressort (51) étant placé entre ledit appendice (53) et l'autre paroi d'extrémité du boîtier (1').

9. Interrupteur selon les revendications 1 et 2, caractérisé en ce que le boîtier d'interrupteur est constitué d'un élément en forme de L (G) qui est fixé à un plan de fixation d'interrupteur (70), avec sa première jambe (57) perpendiculaire au plan de fixation de l'interrupteur (70), et son autre jambe (58) disposée parallèle à et à une certaine distance de celui-ci et étant formée sur son côté tourné vers le plan (70), avec un évidement (59) dans lequel l'élément de déformation du câble (64) est monté de façon à être coulissable dans une relation parallèle au plan de fixation de l'interrupteur (70), dans la direction longitudinale de l'élément en forme de L (G), l'élément de déformation du câble (64) étant formé sur son côté qui est opposé au plan de fixation d'interrupteur (70), avec une rainure transversale (164) procurant la première ouverture, et la jambe (58) de l'élément en forme de L (G) disposée parallèle au plan de fixation de l'interrupteur (70), formées dans le côté qui est opposé au plan (70), avec une fente transversale (60) procurant ladite seconde ouverture et ladite troisième ouverture, et l'élément de déformation du câble (64) étant connecté a un bloc de support et de guidage (62) qui est monté de manière coulissante entre le plan de fixation de l'interrupteur (70) et la jambe (58) de l'élément en forme de L (G), disposé parallèle au plan (70), et étant connecté à un élément de commande, tel qu'un câble ou fil (61) ou analogues, se prolongeant transversalement audit câble à fibres optiques (5) et parallèlement au plan de fixation de l'interrupteur (70 et étant déplaçable dans la direction de sa longueur.

10. Clôture anti-intrusion qui est constituée d'une rangée de poteaux verticaux (PS, PB, PM) avec un réseau de clôture étant appliqué à ceux-ci, chacun desdits poteaux ayant une construction creuse, et un couvercle enlevable (75) sur un des côtés parallèle à la clôture, ladite clôture étant prévue avec une pluralité de fils (61, 5) équidistants verticalement, et disposés horizontalement qui sont tendus suivant lesdites rangées des poteaux, certains de ces fils étant des câbles à fibres optiques (5), et lesdits fils étant bloqués en position sur lesdits poteaux, et étant capables de commander des capteurs d'avertissement d'intrusion reçus dans l'intérieur des poteaux en détectant qu'un des fils a été poussé ou déplacé, dans laquelle le capteur associé à un fil (61) est sous la forme d'un interrupteur conformément à la revendication 9, avec son élément en forme de L (G) fixé à une surface intérieure verticale (70) d'un poteau, et avec son bloc de support et de guidage (62) monté de manière coulissante entre ladite surface (70) d'un poteau et une jambe (58) de l'élément en forme de L (G) et connecté au fil (G1) de la clôture.

11. Clôture anti-intrusion constituée d'une rangée de poteaux verticaux (PS, PD, PM) avec un réseau de clôture monté sur ceux-ci, chacun desdits poteaux ayant une structure creuse et un couvercle enlevable (75) sur un des côtés parallèles à la clôture, ladite clôture étant prévue avec une pluralité de fils (61, 5) verticalement équidistants, et disposés horizontalement qui sont tendus suivant lesdites rangées de poteaux, certains de ces fils étant des câbles à fibres optiques (5) et lesdits fils, bloqués en position sur lesdits poteaux, étant capables de commander des capteurs d'avertissement d'intrusion reçus à l'intérieur des poteaux en détectant qu'un des fils a été poussé ou déplacé, dans lequel le capteur associé à un fil de la clôture, qui est constitué d'un câble à fibres optiques (5), est sous la forme d'un interrupteur conformément à la revendication 8, avec son boîtier (1') fixé à une surface intérieure verticale (70) d'un poteau et avec son élément de déformation du câble (41') venant en butée par l'extrémité (52) opposée au ressort (51) de l'intérieur du poteau contre sa couverture enlevable (75), et étant maintenu par ce couvercle dans sa position conductrice contre la sollicitation du ressort (51).
